# EUROPEAN PATENT SPECIFICATION

(11) **EP 4 281 280 B1**
(45) Date of publication and mention of the grant of the patent: **16.10.2024**
(21) Application number: 22707216.2
(22) Date of filing: 21.01.2022
(51) Int. Cl.: B29C 64/35, B29C 71/00, B33Y 40/20

(54) **APPARATUS FOR SURFACE FINISHING OF POLYAMIDE POLYMER ARTICLES OBTAINED BY ADDITIVE MANUFACTURING AND RELATED SURFACE FINISHING METHODE**
VORRICHTUNG ZUR OBERFLÄCHENENDBEARBEITUNG VON DURCH GENERATIVE FERTIGUNG HERGESTELLTEN POLYAMIDPOLYMERARTIKELN UND ZUGEHÖRIGES OBERFLÄCHENVERARBEITUNGSVERFAHREN
APPAREIL DE FINITION DE SURFACE D'ARTICLES EN POLYMÈRE DE POLYAMIDE OBTENUS PAR FABRICATION ADDITIVE ET MÉTHODE DE FINITION DE SURFACE ASSOCIÉE

(30) Priority: 21.01.2021 IT 202100001073
(43) Date of publication of application: 29.11.2023
(73) Proprietor: 3DNextech S.R.L., 57123 Livorno (IT)
(72) Inventor: ARIENTI, Andrea, 57128 Livorno (IT); FOLLADOR, Maurizio, 10040 Givoletto (TO) (IT); NENCINI, Luca, 57128 Livorno (IT)
(74) Representative: Giraldi, Elisa
(86) International application number: PCT/IB2022/050521
(87) International publication number: WO 2022/157688

(56) References cited:
- WO-A1-2010/002643
- WO-A1-2019/201922
- RU-C1- 2 625 848

## Description

### Technical field

The present invention generally relates to the field of surface finishing treatments of articles made of polymeric material obtained by additive manufacturing techniques and more particularly it relates to an apparatus and a method for surface finishing of these articles, especially those made of a polyamide material.

### Background art

As is known, additive manufacturing processes, commonly known as 3D printing processes, permit three-dimensional objects to be reproduced from corresponding models made by a 3D modelling software. Machines, apparatuses and entire systems based on such processes are spreading with increased rapidity on the market by virtue also of the reduction of their cost and of an increasingly diversified range of products put on the market covering from professional and/or industrial apparatus up to desktop-type, office and household machines.

The use of 3D printers has rapidly spread from rapid prototyping to a myriad of other applications in a wide variety of areas, from architecture to entertainment, from the biomedical sector to the aerospace sector, and many others.

In general, 3D printing processes involve layer-by-layer deposition of a suitable material to obtain an object in three dimensions. The most widespread technology, mainly by virtue of its low cost, is the deposition printing or FFM/FDM (Fused Filament Fabrication / Fused Deposition Modelling), wherein a polymeric filament is heated up to melting and passed through a nozzle that, under the guide of a software, while moving deposits the material to form overlapping layers. The most commonly used materials in this type of technology are ABS (acrylonitrile-butadiene-styrene) and PLA (polylactic acid). According to other technologies, powder polymeric or metallic materials or liquid polymeric materials are used.

The layer thickness is typically 50-100 micron, but a thickness in the range of 10 micron may be obtained, resulting however in longer manufacturing time. Finishing quality obviously is better by reducing layer thickness, but, nevertheless, the object surface is relatively streaked, uneven and porous, whereby the objects may either display undesired properties (for example, they may become soaked with liquid) or have an appearance unsuitable for their final destination (for example, in the case of decorative objects). In other instances, the surface unevenness does not meet desired requirements and/or dimensional tolerances (for example, where the object manufactured by 3D printing is a mould). In all these cases, and other ones not mentioned related to the quality of the produced piece, surface finishing treatments must be used.

A known method for the surface finishing of plastic material articles obtained, for example, by injection moulding, involves dipping the article in a solvent compatible with the plastic material or exposing the article to vapours of the solvent for a prefixed time sufficient to cause a limited surface solubilisation of plastic material which can flow on the surface on the article surface enough to smooth any roughness present thereon (see for example US5448838).

This method has been extended also to surface finishing of articles made of plastic material obtained by 3D printing. To this subject, see WO03/089218, WO2007/044007, WO2008/088761 and WO2010/002643 and WO2018/235121. For example, in WO2010/002643 the piece to be finished is immersed cold and at atmospheric pressure in a chamber saturated with vapours of a suitable solvent that, due to the high thermal gradient, condense on the surface of the piece dissolving a surface layer. In WO2018/235121, in the name of the present applicant, in the treatment chamber the piece is in thermal equilibrium with the vapour of a plasticizing agent and therefore does not condense on the piece, but penetrates into the surface of the piece for a controllable depth producing a transient plasticization of a surface layer with reduction of the glass transition temperature (T_{G}) of the material.

Russian patent RU2625848C1 discloses an apparatus for surface finishing of polymeric pieces made of thermoplastic material and produced by additive manufacturing comprising a chamber for the treatment of the piece and a reactor, communicating with the chamber, performing the dual function of a) evaporation of the solvent that is fed to the chamber as a vapour to produce a partial surface softening of a surface layer of the piece, and b) condensation of the solvent vapour at the end of the exposure step. In order to obtain the solvent evaporation and the subsequent vapour condensation, the reactor is equipped with a Peltier cell device acting as refrigerator or as heater depending on the current circulating in the cells.

As solvents or plasticizing agents suitable for these uses, essentially directed to surface finishing of pieces made of ABS or PLA, halogenated solvents (such as trichloroethylene, hydrofluorocarbons) and mixtures thereof, ketones (such as acetone, methilethilketone and analogues) have been proposed to be selected as a function of the plastic material and operating conditions.

Another family of polymeric materials used in 3D printing is that of polyamide materials, especially the aliphatic polyamide such as the nylon family. As is known, by the term Nylon there are indicated especially the aliphatic polyamides that can be of the type AB or AABB, where A and B respectively indicate the functional groups -NH and -CO. Type AB polyamides have general formula (-NH-(CH₂)ₓ-CO-)ₙ, n being the number of repeating units, while the AABB type polyamides have general formula (-NH-(CH2)ₓ-NH-CO-(CH₂)_{(y-2)-}CO-)ₙ. Softening temperature generally starts at 235°C (for nylon 6 is 160°C), melting temperature is about 250°C (nylon 6, 210-220°C).

Additive manufacturing technologies for the different types of Nylon are essentially three:
- Fused deposition modelling (FDM or FFF) is the most common type of 3D-printing. The FDM 3D-printers form the parts of an object by melting and extruding a thermoplastic filament, that a print nozzle deposits layer-by-layer in the print area. This technique is suitable for basic *Proof-of Concept* models, as well for rapid, low-cost prototyping of simple parts. The lines of the layers deposited one on the other tend to be visible, resulting in a rough appearance of the printed parts. FDM offers a resolution and a precision lower than those given by stereolythography or selective laser syntering and is not the more suitable option when complex design or parts with elaborate details have to be printed.
- SLS (Selective Laser Syntering) uses an high power laser to fuse small particles of polymer powder. Not fused powder holds the part during the printing process and eliminates the need for dedicated support structures. This makes SLS ideal for complex geometries, internal or in-negative details and thin walls. The parts produced by SLS printing have excellent mechanical features, with a strength similar to that of the parts created by injection moulding, but with a certain degree of porosity, which does not ensure the waterproofing of the pieces produced in this way. The parts from SLS have slightly rough surface finishing and layer lines less visible compared to FDM.
- ...MJF (Multi Jet Fusion) technology is based on the use of powders arranged to form a powder bed which is heated evenly initially. Then a fusion agent is deposed at the points where the particles have to be selectively fused; a finishing agent is deposed around the borders to improve the resolution of the parts. The heating source is an IR lamp that is passed over the surface of the powder bed. The deposed material captures heat and helps distributing in an uniform way. The substantial difference with SLS is the selective ability of the heating which improves the possibility of obtaining complex details and increases the printing speed.

Whatever the printing method, the resulting Nylon articles exhibit similar problems to those of the articles made of ABS, PLA, and other materials, namely surface roughness and rugosity, porosity and other surface unevenness that have to be removed by finishing treatments following their manufacture, although to a varying extent depending to the particular manufacturing technique.

WO2018/127683 discloses an apparatus and a method for post-processing a polymeric piece made of thermoplastic material, in particular polyamide or polyurethane, produced by additive manufacturing. According to the method, the produced piece is placed in a treatment chamber, a controlled amount of a previously vaporized solvent is fed in the chamber as a result of a negative pressure between 10 and 400 mbar applied therein. The chamber is heated up to a maximum temperature of 100°C while the piece is cooled to create a thermal gradient between the solvent vapour and the surface of the piece, whereby the solvent vapour condenses thereon. By applying again a negative pressure the solvent is re-evaporated and recovered at the end of the prefixed treatment time, which is set by a process controller on the basis of a parameter associated to the piece, such as rugosity, geometry and the like.

The solvent is selected among 1,1,1,3,3,3-hesafluoro-2-propanol (HFIP), dimethilformamide, sulphuric acid, m-cresole, formic acid, trifluoroacetic acid, and benzyl alcohol and any solvent able to create strong hydrogen bonds.

WO2018/127683 also discloses an apparatus for putting the method into practice comprising a tank for liquid solvent, a treatment chamber communicating with the tank in a way to control the amount of supplied solvent, a controller configured to perform a controlled treatment of a polymeric piece, obtained by additive manufacturing and placed in the treatment chamber, by the solvent on the basis of at least a parameter associated to the piece. The apparatus further comprises: a feeding system of the solvent upstream of the treatment chamber, a solvent heating device and a chamber vacuum pump, which are controlled by the control system so as to fed a controlled amount of vaporized solvent in the treatment chamber. There are provided means for heating the treatment chamber and for cooling the piece to cause the solvent vapour condense on the surface thereof. At the end of the treatment the solvent re-evaporation for solvent recovery is obtained by creating a negative pressure in the chamber by means of the vacuum pump.

The method according to WO2018/127683 is based on rapid condensation of the solvent on the piece to achieve a very short treatment time (a minimum time of 5 seconds for nylon is stated). Furthermore, the solvent used (HFIP) is very aggressive and also contributes to perform the treatment very quickly. However, these two conditions make the control of the surface layer solubilisation process very critical, which dictates all the operating parameters to be carefully controlled. In particular, to this end, in WO2018/127683 there are implemented: a) a software to calculate, on the basis of some physical parameters of the object, the exact amount of solvent to be fed; b) a system for precisely setting the temperature difference between object and solvent (cooling of the object is foreseen in some cases); c) a system for creating a high vacuum, for a better control of the solvent evaporation, and; d) a real time monitoring system to measuring the amount of solvent vapour contacting a sample, to avoid excess condensation and damage to the object. All these systems are complex, though necessary, otherwise the treatment would be difficult to control.

Therefore, it is a very felt need to carry out the surface finishing of pieces made of polyamide material, such as nylon, obtained by additive manufacturing technique, in a safe and effective way, with acceptable treatment time, and with a compact apparatus at a reasonable cost.

### Objects and Summary of the Invention

The object of the present invention is, therefore, to provide a method for surface finishing of polymeric pieces made of polyamide material obtained by 3D printing which allows to remove roughness, porosity and any other unevenness present on their surface, while avoiding any possible risk of damaging their aesthetical and/or functional features.

Another object of the present invention is to provide a method of the above mentioned type where the finishing treatment and the subsequent cooling of the piece are carried out without the need of removing piece from the treatment chamber and without damaging the piece surface during cooling.

A further object of the present invention is to provide a method of the above mentioned type wherein the surface finishing treatment is carried out in an efficient way by optimizing the quality of the obtained result, as well as the time and cost of the treatment.

Another object of the present invention is to provide a method of the above mentioned type allowing a suitable control of the process without resorting to severe operating conditions, process materials which might result dangerous to an operator and/or complex control systems.

It is still another object of the present invention to provide an apparatus for surface finishing of polymeric pieces made of polyamide material obtained by 3D printing allowing the above mentioned method of surface finishing to be performed in an efficient and easily manageable way by an operator.

These objects are reached with the apparatus and the method for surface finishing of polymeric pieces made of polyamide material obtained by 3D printing according to the present invention, the essential features of which are set forth in claims 1 and 8. Further important features are set forth in the dependent claims.

According to a first aspect of the present invention there is provided an apparatus for surface finishing of polymeric articles made of polyamide obtained by additive manufacturing, comprising
- a treatment chamber configured to receive at least one article and equipped with hermetic closure means;
- heating means of said hermetically closed chamber for raising the internal temperature of the chamber and the temperature of the polymeric article placed therein to a prefixed operating temperature and for keeping them to said temperature over the whole treatment time;
- a liquid main tank for a process material in fluid communication with said chamber to feed said liquid process material in the chamber once said operating temperature has reached, whereby part of the liquid vaporizes and the formed vapour comes into contact with the surface of the article causing softening of a surface layer thereof, whereas the remaining part of said liquid process material remains in the liquid phase at the bottom of said chamber in thermodynamic equilibriun with said vapour;
- inner fan means placed in said chamber to move the vapour atmosphere formed therein, capable of being activated once said liquid process material is fed to the chamber;
- a process material recovery unit comprising heat exchange means to cool the liquid discharged form the bottom of said chamber due to a positive pressure formed therein at the end of the contact step between the vapour and the article surface, and to condense the vapour of said process material from said chamber;
- cooling and washing means for cooling and washing the walls of said chamber comprising a washing tank for a washing liquid and means for dispensing said liquid on the walls of said chamber.

Preferably, means for entering air into the chamber are provided to entrain the process material vapour towards the heat exchange means. According to the invention, the apparatus comprises means for cooling and washing the inner walls of the chamber once most of vapour present therein has been removed.

According to the invention, said cooling and washing means of the inner walls comprise a washing tank for a washing liquid and means for dispensing said liquid within said chamber.

Preferably, the process material is a polar protonic solvent, notably pure acetic acid. As an alternative, the process material is a mixture with a concentration by weight of acetic acid not lower than 60%.

According to another aspect of the present invention there is provided a method for surface finishing of polymeric articles made of polyamide obtained by additive manufacturing comprising the steps of;
- placing at least one of said articles in a operating chamber and hermetically closing said chamber;
- heating said chamber and the article placed therein at a prefixed operating temperature;
- once said prefixed temperature has reached, feeding a liquid process material into said chamber, to partially vaporize said liquid and expose the surface of said article to the formed vapour which penetrates thereinto to lower the glass transition temperature of the polymer at least in a surface layer therof, thus causing softening and flowing of polymer layer, a part of said liquid process material remaining at the bottom of said chamber as a liquid phase in thermodynamic equilibrium with said vapour, at a positive pressure comprised between 100 and 200 kPa and at operating temperature over a prefixed exposure time;
- once said prefixed eposure time between said vapour and said article has elapsed, quickly depressurizing said chamber, using said positive pressure to push said bottom liquid towards a recovery unit where it is cooled and collected;
- discharging the vapour present in the chamber towards said recovery unit where the vapour is condensed and the condensate is cooled and collected;
- circulating a cooling and wall washing liquid in said chamber before opening it and removing the treated article.

Preferably, the method comprises entering air in the chamber after said quick pressure reduction to entrain the vapour present therein towards the recovery unit where the vapour is condensed and collected.

According to the invention, the method comprises circulating a liquid for cooling and washing the walls of said chamber before opening it to remove the processed article.

Preferably, the process material is a polar protonic solvent, notably pure acetic acid or a mixture thereof wherein the weight concentration of acetic acid is not lower than 60%.

Preferably, the operating temperature is few degrees higher than the boiling temperature of the process material at atmospheric pressure, in particular up to 5±1 °C higher than the boiling temperature at atmospheric pressure.

Preferably, the operating temperature is about 120°C when the process material is pure acetic acid.

### Brief description of the drawings

Further characteristics and advantages of the apparatus for surface finishing of polymeric articles made of polyamide material obtained by 3D printing and the relevant finishing method will be apparent from the following, exemplifying and not limiting description of embodiments thereof made with reference to the attached drawings, in which:
Figure 1 is a diagrammatic view of the apparatus according to the present invention;
Figure 2 is a block flow diagram showing the surface finishing process according to the invention.

### Detailed description of the invention

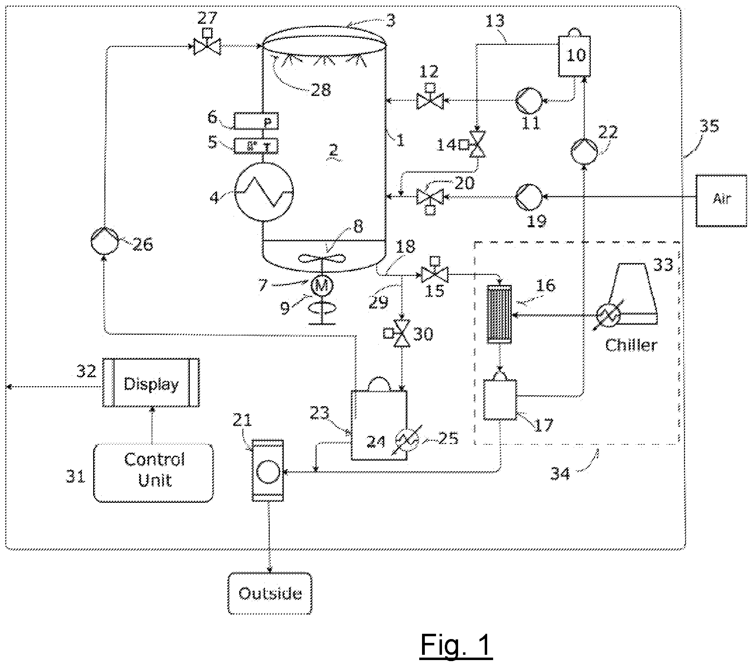

With reference to figure 1, the apparatus for the surface finishing of thermoplastic articles obtained by additive manufacturing (3D printing) comprises a tank 1 delimiting inside a chamber 2 for processing one or more articles made of thermoplastic material, in particular a polyamide such as nylon 6,6. Tank 1 is equipped with a cover 3 allowing chamber 2 to be hermetically closed in operation, so as to be able to operate at a positive pressure.

The apparatus further comprises a liquid main tank 10 for a process material as a liquid connected to tank 1 and fluid communicating with chamber 2 in a controlled way. The process material is a substance or a compound or a mixture of compounds suitable to produce at least a surface softening of the article when the process material is put into contact with the article under appropriate process conditions. The process material is preferably a polar protonic compound and most preferably is pure acetic acid or a mixture containing acetic acid at a weight concentration not lower than 60%.

Tank 1 is equipped with heating means, schematically shown in Figure 1 and indicated at 4, to raise the temperature of the chamber and of the article placed therein at a prefixed operating temperature and to keep said temperature over the entire duration of the treatment of the article. In order to prevent heat loss, tank 1 is thermally insulated with insulating material, not shown in the figure.

Preferably, heating means 4 are arranged on outer wall of tank 1. The heating means can be silicone adhesive thermal pads, or ceramic heating elements, or any suitable means for raising the inner temperature of chamber 2 to the prefixed operating temperature, for example, about 120°C in a time ranging from 10 to 20 minutes, when the process material is pure acetic acid.

Tank 1 is also equipped with a control device 5 for controlling the inner temperature of chamber 1 and a control device 6 for controlling the inner pressure of chamber 1, which are connected to a process controller designed to regulate heat supply from heating means 4 to keep the prefixed operating conditions during the treatment.

Internal fan means 7 are further provided for maintaining an homogeneous atmosphere inside chamber 2, as far as temperature and process material concentration are concerned.

In particular, said internal fan means 7 can comprise a fan 8, placed at the bottom of chamber 2 and spaced from the bottom so as to be over the liquid process material present at the bottom during the treatment step. Fan 8 is magnetically connected to a motor 9 outside of chamber 2.

The article/s coming from an additive manufacturing unit (not shown as not falling within the scope of this invention), the surface of which must be finished to remove roughness, porosity and local unevenness, are suspended or placed on suitable supports, not shown, available in chamber 2 of tank 1. Then cover 3 is hermetically closed and heating means 4 are started once chamber 2 is hermetically closed.

From the bottom of tank 1 a discharge conduit 18 extends connecting chamber 2 to the outside. A valve 15 is mounted on discharge conduit 18. During heating step of chamber 2, that is hermetically closed, valve 15 is kept open, so as to vent outwards the pressure increase due to heating of the air contained in chamber 2. The outwardly discharged air passes through an abatement filter 21, whereby the final pressure in chamber 2, once the operating temperature has reached, will be the equilibrium pressure with filter 21, i.e. substantially equal to the atmospheric pressure.

The liquid main tank 10 is hermetically closed and communicates with chamber 2 through a peristaltic pump 11, or equivalent, for dosing the amount of liquid to enter in chamber 2, and a control valve 12. Liquid main tank 10 communicates with chamber 2 also through a pressure balancing conduit 13, equipped with a valve 14. Once the liquid process material starts entering chamber 2, namely immediately after chamber 2 has reached the prefixed operating temperature, valve 15 is closed, valves 12 and 14 are opened and at the same time peristaltic pump 11 is started. Valve 14 is opened with a view to create a closed circuit between chamber 2 and liquid main tank 10, so as to avoid a pressure increase in chamber 2 due to the inlet of the liquid thereinto.

Once entered chamber 2, liquid process material at least in part vaporizes. At the same time, fan 8 is started and kept running over the entire duration of the article treatment, so as to move the vapour atmosphere in chamber 2, thus ensuring homogeneous temperature conditions and uniform vapour distribution on the surface of the article.

The volume of liquid process material supplied to chamber 2 is such that, considering the chamber volume and the operating temperature, a certain fraction of the volume remains at the bottom of chamber 2 as a liquid phase in thermodynamic equilibrium with the vapour contained in chamber 2.

Furthermore the apparatus comprises a recovery unit of the process material employed in the treatment cycle, the unit being generally indicated at 34. The process material recovery unit 34 comprises heat exchange means 16, configured both to condense the vapour and to cool the condensate, and a condensate collection tank 17. Chamber 2 communicates with heat exchange means 16 through discharge conduit 18 and valve 15, while filter 21 is mounted downstream condensate collection tank 17. In the present embodiment of the invention the same circuit comprising process material recovery unit 34 is advantageously used both to perform the function of recovering the process material and to vent air from chamber 2 during the heating step.

Due to the positive pressure established in chamber 2 (approximately 100 to 200 kPa) at the end of the contact step between the vapour and the surface of the article under treatment, when valve 15 is opened the liquid phase is pushed from the bottom of chamber 2 to the condensate collection tank 17. In this step heat exchange means 16 simply act to reduce the temperature of the liquid.

The discharge conduit 18 connecting chamber 2 to valve 15 sucks from the bottom of chamber 2, whereby the liquid is the first phase to be sucked upon opening valve 15. Valve 15, mounted outside chamber 2, is located above the liquid level at bottom thereof, whereby during the treatment the liquid does not completely fill conduit 18 and the valve does not get wet.

It has to be noted that the recovery of the liquid at the bottom of chamber 2 is achieved thanks to the positive pressure in chamber 2 that must be reduced to the atmospheric pressure within the shortest possible time to avoid forming defects at the surface of the treated article. Preferably, the passage from the operating pressure, present in chamber 2 at the end of the vapour exposure time, to the atmospheric pressure is comprised between 10 and 60 seconds.

Since condensation of process material vapour may require a relatively low temperature of the heat transfer fluid, heat exchange means 16 can be advantageously associated to a cooling unit 33, in which the heat transfer fluid is cooled through a chiller group of the conventional type.

Once all the liquid phase is expelled from chamber 2, all the vapour phase still filling chamber 2 must be discharged. To this end the apparatus comprises an air pump 19, which supplies outer air through a valve 20. When air pump 19 is started and the relevant valve 20 is opened, while keeping valve 15 open, a mixture of air and vapour is pushed out of chamber 2 to heat exchange means 16. The produced condensate is collected by gravity in condensate collecting tank 17. A pump 22 transfers the condensate to the liquid main tank 10 at the end of the operating cycle of heat exchange means, while air still containing small amounts of vapour of uncondensed process material is discharged outside chamber 2 after being passed through filter 21.

The apparatus further comprises a cooling and washing unit of the inner walls of chamber 2, generally indicated at 23. It is preferred to provide this unit because, at the end of the process material recovery step, chamber 2 is still at an high temperature and contains a small amount of process material mostly condensed on the walls getting cooled. In order to safely open tank 1 where the treatment of the article has been carried out without waiting its natural cooling, the temperature must be reduced to about room temperature and process material shall not be present.

To this end, the cooling and washing unit 23 comprises a washing tank 24 containing a washing solution, a washing solution cooling system 25, a washing pump 26 that sucks the washing solution from washing tank 24 and sends it to chamber 2 through a valve 27 to be spread on the walls.

In particular, to distribute the cooling and washing liquid on inner walls, including inner wall of cover 3, spraying nozzles 28 can be provided arranged in the upper part or dome of chamber 2 and faced to inner walls. Used washing solution is returned to washing tank 24 through discharge conduit 18 and a conduit with a valve 30 that is opened to carry out washing operations, while valve 15 is closed. The circulation of cooling and washing solution ends when temperature in chamber 2 reaches a prefixed value, close to room temperature. As cooling and washing solution, water may be used, preferably pH-neutral water, at 5-15°C.

Preferably, before opening tank 1 outside air is supplied by pump 19 in chamber 2 to ensure its complete drying. Drying air is discharged to the outside through discharge conduit 18 and abatement filter 21.

The apparatus is controlled by a control unit 31 (for example, Raspberry or the like) through a display 32 by which an operator may set the working parameters and monitor the steps of the treatment carried out in the apparatus.

The components of the above described apparatus, the relevant fluid connections and instruments are contained in an outer box-like housing, schematically shown and indicated at 35, on which display 32 and relevant controls are provided as well as an outer cover (not shown) allowing access to tank 1 and relevant hermetic cover 3.

The dimensions of tank 1 defining inside chamber 2 may be any and commensurate to the number and/or the size of the article/s to be treated. In a possible exemplary embodiment the volume of chamber 2 may be about 100 litres. When large size articles (such as, for example, a motorcycle fairing) or a high number of small articles suitably arranged in chamber 2 have to be treated, such volume is a good technological balance in view of a containment of costs due to the used heating technology. The process material used for every treatment cycle may vary from 300 to 400 ml. Clearly, according to the user needs, a treatment tank of different size may be used, even of larger size with appropriate, more expensive heating technologies.

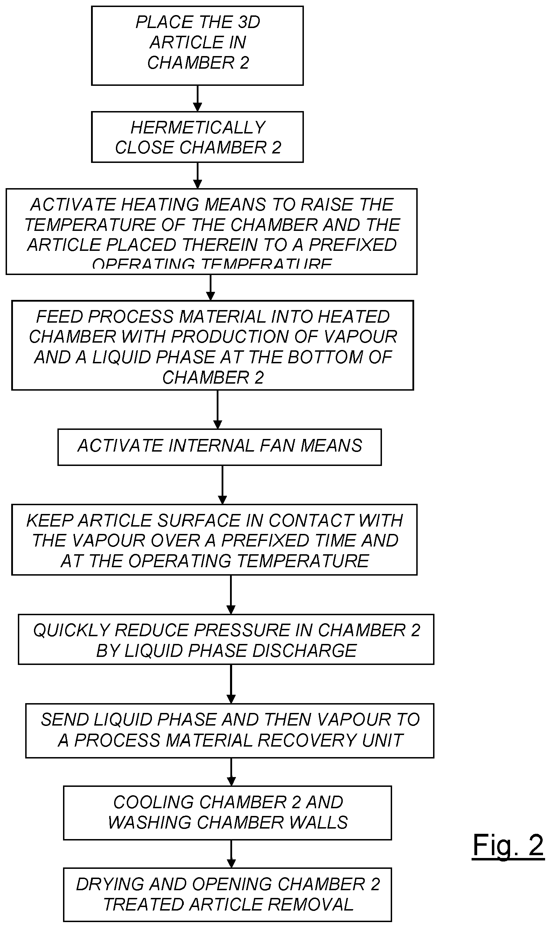

With reference to figure 2, the method for surface finishing of articles obtained by additive manufacturing processes and made of polymeric material such as polyamide according to the present invention uses, as a process material for surface finishing (surface smoothing to remove roughness porosity and other surface unevenness resulting from the additive manufacturing process) a compound capable of forming hydrogen bonds with the amide groups of the monomeric units of polyamide which are competitive with inter-macromolecular bonds present in the base polymer. This ability may be found, for example, with compounds having polar protonic molecules, such as acetic acid, which in the presently described embodiment of the invention is used as pure acetic acid at a temperature few degrees above its boiling temperature (118°C at atmospheric pressure).

In addition to the pure form, the acetic acid can also be used in the form of a mixture provided that the weight concentration of acetic acid is not lower than 60%. In the case of a mixture the boiling temperature of the component/s other than acetic acid must be comparable to that of acetic acid to ensure an acetic acid concentration in the vapour phase sufficient to perform the treatment properly.

An acetic acid containing mixture that can be used is an azeotropic mixture between acetic acid and a second component. An azeotropic mixture that can be used to the end of the present invention is the mixture acetic acid / dibutyl ether with a dibutyl ether content equal to 19% wt. This azeotropic mixture has a boiling temperature of 116,7 °C. Using this mixture the operating parameters and the treatment time are substantially the same as those described above.

The formation of hydrogen bonds between polymer and acetic acid, at least partially replacing polymer-to-polymer bonds, results in a surface softening of the article sufficient to allow material reflowing and surface smoothing.

Generally speaking and without being linked to any theory, the temperature selected to perform the treatment and the acid force synergically act to attack the polyamide and promote the formation of an adduct polyamide / polymer. The action mechanism of acetic acid is to cleave the hydrogen bond present among the polymeric chains and replace it with a new bond between acid and polyamide thus increasing the molecular mobility thereof. The operating temperature is far above the T_{G} of PA (linear aliphatic polyamides or nylon) which generally in around 60°C, but below their melting point (higher than 200°C). The effect of acetic acid mainly acts on the amorphous part of the polymer where inter-chain hydrogen bonds are present, but increases the mobility by also affecting the crystalline phase.

Although the polar molecules only diffuse in the amorphous regions, they speed up the structural changes in the crystalline regions even below the melting point. There are strong bi-directional interactions between crystalline segments and amorphous segments. These interactions between crystalline and amorphous domains play an important role in determining strain behaviour, including shrinkage and thermally induced transitions.

Acetic acid is a solvent able to solubilise nylon, however at different times as a function of method of use, operating temperature and amount of acid used. For example, it is possible to operate by dipping the article in the boiling acid, but the process is difficult to manage and too aggressive. Due to the destructive nature of the process it is important that the article temperature to be treated be homogeneous and few above the boiling temperature of the acetic acid; this allow the acid acetic vapour to work at the ideal temperature and perform the surface finishing over relatively short time and in a controllable way, as well as with repeatable results.

Therefore, the method according to the invention provides for bringing the acid acetic vapour into contact with the article heated to a temperature few degrees above the boiling temperature of the acid, so that the operation can be carried out at the maximum yield conditions, namely relatively short treatment time and possibility to have a good control of the acid action strength on the article surface.

The preferred treatment conditions are an operating temperature of about 120°C, namely a temperature few degrees above the boiling temperature of the acetic acid at atmospheric pressure (up to 5±1°C), and an operating pressure from 100 to 200kPa, therefore the treatment must be carried out in an hermetically closed treatment chamber.

To meet these conditions in an optimal way, as shown in figure 2, the article/s to be treated Is/are placed, suspended or supported, in the chamber that is hermetically closed. The chamber and the article/s are gradually heated up to reaching the operative temperature equal to about 120°C, while venting air in a controlled way to keep the pressure in the chamber at the atmospheric pressure. Upon reaching the operative temperature acetic acid is entered in chamber 2 where it passes into vapour phase quickly. As an alternative, the necessary volume of liquid acetic acid may be entered in the chamber before heating is started. In this case vapour forms gradually as heating proceeds. In both cases, at the steady state, the operating pressure ranges from 100 to 200 kPa.

The time required to reach the operating conditions of start of the treatment is comprised between 10 and 20 minutes, depending on the heating means used.

Once the operating conditions are reached, a ventilation in the chamber is activated to create a proper movement of the vapour and air contained therein. In this way uniform temperature conditions in the treatment chamber and an homogeneous distribution of the vapour on the surface of the article/s to be treated are ensured.

The treatment time, namely the exposure time or contact time between acetic acid vapour and the surface of the article/s to be treated, may vary between 2 and 15 minutes, preferably around 10 minutes. In particular, a treatment time of at least 2 minutes may be necessary for articles with a surface area lower than about 240 cm². Very bulky articles may require a treatment time in the order of 10 minutes. Too long treatment times, over 15 minutes, result in an unacceptable degradation of the article geometry. The treatment time is counted from the reaching of the minimum threshold of the following parameters inside the chamber: temperature 120±2°C and pressure 120±1 kPa.

The volume of used acetic acid is such that not all the liquid turns into vapour during the treatment, so as to leave a liquid phase at the bottom of treatment chamber. The used volume does not depend on the number or the size of the articles under treatment, but rather on the operating temperature and volume of the chamber. A value of the volume of used acetic acid, which may be re-used for a number of treatment cycles by optimizing the recovery operation, is comprised between 300 ml and 1 litre, in particular between 300 and 400 ml.

In any case, the amount of acetic acid fed to the treatment chamber must be in excess with respect to that experimentally required to take into account the fact that a variable part of volume is absorbed by the articles under treatment and to be sure that the vapour concentration is as necessary, namely that all the working volume be saturated with vapours. Moreover, the presence of a liquid phase of acetic acid at the bottom of the chamber ensures that an equilibrium between the liquid and the vapour phases is established and, thus, a well-defined temperature of the vapour phase is maintained because the heat supplied acts only to vaporize the liquid, thus avoiding any formation of superheated vapour.

The parameters that determine the duration of the treatment are essentially two: the space occupied by the article/s in the chamber and the presence of thin walls. More precisely, if the article has thin walls (thickness lower than 3 mm), the treatment time is between 2 and 3 minutes. Very bulky articles hindering vapour circulation require a longer treatment time in the range of 5 to 15 minutes, depending on the fact that the article is solid, half-empty or empty. The apparatus has a standard set of 4 minutes, this time being appropriate for most cases on the basis of the tests that have been conducted.

Once the prefixed treatment time has elapsed, the pressure in the treatment chamber is comprised between 100 and 200 kPa. First, the pressure must be quickly reduced down to the atmospheric pressure.

The necessity to decrease quickly the pressure down to the atmospheric pressure is because, if it were slowly reduced (for example, by cooling the closed chamber by outer air convection only), bubbles would form on the surface of the treated article due to acid escaping from the article inside. Instead, a quick pressure reduction (in a time comprised between 10 and 60 seconds), "freezes" the condition of the article, because the acetic acid transiently remains in the article and then escapes by diffusion at the end of the treatment, by submitting the article to a drying treatment or oven heating.

The positive pressure present in the treatment chamber is advantageously used to start the acetic acid recovery, which takes place in two steps, a first step wherein the liquid phase is discharged and a second step wherein the vapour phase is discharged. In the first step the pressure in the treatment chamber pushes the liquid acetic acid at its bottom towards a collection tank after being cooled in heat exchange means of the acetic acid recovery unit, as described above. This is achieved by opening the discharge conduit sucking from the bottom of the chamber and communicating with the acetic acid recovery unit.

After pressure in treatment chamber is about in balance with the atmospheric pressure, the method of the invention provides for the discharge of the hot acetic acid vapour still present therein. The vapour must be evacuated before opening the chamber to pick up the treated articles and to recover the acetic acid to use it again in further treatment cycles.

To remove hot acetic acid vapour from the treatment chamber, air is entered so as to push out the vapour through the discharge conduit and the heat exchange means, serving as condenser in this step. The operating temperature of the condenser is kept as low as possible, in particular at about 18°C, namely few degrees above the melting point of acetic acid (i.e., 17°C). The condensate is sent to collecting tank and at the end of the condensation step its content is transferred to main tank.

The air containing residual acetic acid entrained therein, before being discharged to atmosphere, is submitted to a step of acetic acid removal in a suitable removal unit to avoid releasing acetic acid in the environment.

When the acetic acid recovery step is over, the method of the invention provides for a step of cooling the chamber and washing the inner wall thereof. As a matter of fact, at the end of the acetic acid recovery step the chamber is still at high temperature and with a small amount of acetic acid condensate mainly on the walls that are cooling. In order to be able to safely open the apparatus, It is necessary that inner temperature falls to about room temperature in reasonably short times and the chamber is acetic acid free.

Washing is carried out with water, preferably neutral-pH buffered water, at a temperature comprised between 5 and 15°C. Washing water is circulated in the chamber until the desired temperature close to room temperature is reached therein. In an embodiment of the invention the inner temperature reaches 80°C after about 100 seconds of washing and reaches the room temperature after about 300 seconds. Cooling and washing step must be carried out in a short time, as exemplified above, to avoid artifacts and deformations of the treated article.

Before opening the chamber, air is advantageously circulated therein to dry the walls and the treated articles.

It is advisable to place the treated article in a dryer at a temperature of 45-50°C for at least 12 hours, to remove possible residues of process material still retained in the polymeric matrix.

The method and the apparatus according to the present invention were tested using polyamide samples obtained by 3D printing.

In all the tests described below pure acetic acid was used. The operating condition were 120 °C and 145 kPa.

In a first test, two standard eyeglass frames 3D-printed in Nylon-6, with front 100 mm wide and temples 140 mm long, were treated for surface finishing. One of the frames comprised a surface pattern. These samples were featured by very thin parts. The treatment time (contact with acetic acid vapour) was 2 minutes for the sample with surface pattern and 3 minutes for the other one.

In a second test the samples were chess pieces, made of Nylon-6, in particular, a King, 8 cm height, and a Pawn, 6 cm height. For these pieces, being of the solid type, standard type treatment, namely 4 minutes of vapour exposure, was appropriate.

In a third test the sample was a motorcycle fork piston made of Nylon-6. The piece was solid 35 cm long and 8 cm wide. A treatment time (vapour exposure) of 10 minutes was required.

All the treated samples displayed a roughness reduction of at least 90% (R_{a final} = 0,4 micron) and became waterproof. In order to test this property, an elbow joint made of nylon-6 was printed by 3D printing and subjected to surface treatment. The joint was then filled with water up to a inner pressure of 3 bar (300 kPa) without water losses from its surface. In addition, it was shown that, after the surface treatment, the samples could be subjected to painting and electroplating.

## Claims

1. Apparatus for surface finishing of polyamide articles obtained by additive manufacturing,comprising:
- a treatment chamber (2) configured to receive at least one article and equipped with hermetic closure means (3);
- heating means (4) of said hermetically closed chamber for raising the internal temperature of said chamber and the temperature of the polyamide article placed therein to a prefixed operating temperature and for keeping it to said temperature over the whole operating time;
- a liquid main tank (10) for a liquid process material in fluid communication with said chamber (2) to feed said liquid process material in said chamber once said operating temperature has reached, whereby part of said liquid process material vaporizes and the formed vapour comes into contact with the surface of said article causing softening of a surface layer thereof, whereas the remaining part of said liquid process material remains in the liquid phase at the bottom of said chamber in thermodynamic equilibrium with said vapour;
- inner fan means (7) placed in said chamber (2) to move the vapour atmosphere formed therein, capable of being activated once said liquid process material is fed to said chamber;
- a process material recovery unit (34) comprising heat exchange means (16) to cool the liquid process material discharged from the bottom of said chamber due to a positive pressure formed therein at the end of the contact step between the vapour and the article surface, and to condense the vapour of said process material from said chamber,
and **characterized by**:
- cooling and washing means (23) for cooling and washing the walls of said chamber comprising a washing tank (24) for a washing liquid and means (26, 28) for dispensing said liquid on the walls of said chamber (2).

2. Apparatus according to claim 1, wherein means (19) are provided to enter air into said chamber (2) to entrain the process material vapour towards said heat exchange means (16).

3. Apparatus according to any one of the previous claims, wherein said cooling/washing liquid dispensing means comprise a pump (26) and spraying nozzles (28) arranged at the top part of said chamber (2) and facing said inner walls.

4. Apparatus according to any one of the previous claims, wherein said process material is pure acetic acid.

5. Apparatus according to any one of the previous claims, wherein said process material recovery unit (34) comprises a refrigeration unit (33) of a heat transfer fluid of said heat exchange means (16).

6. Apparatus according to any one of the previous claims, wherein said heating means (4) are arranged on the outer wall of said chamber (2).

7. Apparatus according to any one of the previous claims, wherein a discharge conduit (18) of chamber (2) is provided to vent air during heating step of hermetically closed chamber (2) and for the passage of the process material liquid and vapour discharged from said treatment chamber (2) towards said process material recovery unit (34) at the end of the treatment of the article.

8. Method for surface finishing of polyamide articles obtained by additive manufacturing, comprising the steps of
- placing at least one of said articles in a treatment chamber and hermetically closing said chamber;
- heating said chamber and the article placed therein up to a prefixed operating temperature;
- once said prefixed temperature has reached, feeding a liquid process material into said chamber, to partially vaporize said liquid and expose the surface of said article to the formed vapour which penetrates thereinto to lower the glass transition temperature of the polyamide at least in a surface layer thereof, thus causing softening and flowing of said polyamide layer, a part of said liquid process material remaining at the bottom of said chamber as a liquid phase in thermodynamic equilibrium with said vapour, at a positive pressure comprised between 100 and 200 kPa and at an operating temperature over a prefixed exposure time;
- once said prefixed exposure time between said vapour and said article has elapsed, quickly depressurizing said chamber, using said positive pressure to push said bottom liquid towards a recovery unit where it is cooled and collected;
- discharging the vapour present in said chamber towards said recovery unit where the vapour is condensed and the condensate is cooled and collected,
and **characterized by**:
- circulating a cooling and wall washing liquid in said chamber before opening it and removing the treated article.

9. Method according to claim 8, wherein, after said quick pressure reduction step, a step of feeding air into said chamber is provided to push the vapour of process material towards said recovery unit where it is condensed and the condensate is cooled and collected.

10. Method according to claim 8 or 9, wherein the quick pressure reduction time is comprised between 10 and 60 seconds.

11. Method according to any one of claims 8 to 10, wherein said prefixed operating temperature is few degrees higher than the boiling temperature of said process material at the atmospheric pressure, in particular no more than 5±1°C above the boiling temperature.

12. Method according to any one of claims 8 to 11, wherein said process material is pure acetic acid, or a mixture of acetic acid and at least another component wherein the concentration of acetic acid in said mixture is at least 60% wt, or a mixture of acetic acid and at least another component wherein the concentration of acetic acid in said mixture is at least 60% wt and wherein said mixture is an azeotropic mixture.

13. Method according to any one of claims 8 to 12, wherein said prefixed operating temperature is about 120°C.

14. Method according to any one of claims 8 to 13, wherein the contact time between the vapour and the surface of the article is comprised between 2 and 15 minutes.

15. Method according to any one of claims 8 to 14, wherein said liquid process material is fed into said operating chamber before the step of heating the chamber up to the prefixed operating temperature.

## Patentansprüche

1. Vorrichtung zur Oberflächenbearbeitung von durch generative Fertigung hergestellten Polyamidartikeln, umfassend:
- eine Behandlungskammer (2), die ausgelegt ist, um mindestens einen Artikel aufzunehmen, und mit hermetischen Verschlussmitteln (3) ausgestattet ist;
- Heizmittel (4) der hermetisch verschlossenen Kammer zum Anheben der Innentemperatur der Kammer und der Temperatur des darin angeordneten Polyamidartikels auf eine vorgegebene Betriebstemperatur und zum Halten auf dieser Temperatur über die gesamte Betriebszeit;
- einen Flüssigkeitshaupttank (10) für ein flüssiges Prozessmaterial, der mit der Kammer (2) in fluidtechnischer Verbindung steht, um das flüssige Prozessmaterial in die Kammer zuzuführen, sobald die Betriebstemperatur erreicht ist, wodurch ein Teil des flüssigen Prozessmaterials verdampft und der gebildete Dampf mit der Oberfläche des Artikels in Kontakt kommt, wodurch ein Erweichen einer Oberflächenschicht davon bewirkt wird, während der verbleibende Teil des flüssigen Prozessmaterials in der flüssigen Phase am Boden der Kammer im thermodynamischen Gleichgewicht mit dem Dampf verbleibt;
- innere Belüftungsmittel (7), die in der Kammer (2) angeordnet sind, um die darin gebildete Dampfatmosphäre zu bewegen, und die in der Lage sind, aktiviert zu werden, sobald das flüssige Prozessmaterial in die Kammer zugeführt wird;
- eine Prozessmaterialrückgewinnungseinheit (34), die Wärmetauschmittel (16) umfasst, um das flüssige Prozessmaterial zu kühlen, das aufgrund eines darin gebildeten Überdrucks am Ende des Kontaktschritts zwischen dem Dampf und der Artikeloberfläche vom Boden der Kammer abgelassen wird, und um den Dampf des Prozessmaterials aus der Kammer zu kondensieren,
und **gekennzeichnet durch**:
- Kühl- und Waschmittel (23) zum Kühlen und Waschen der Wände der Kammer, die einen Waschtank (24) für eine Waschflüssigkeit und Mittel (26, 28) zum Abgeben der Flüssigkeit auf die Wände der Kammer (2) umfassen.

2. Vorrichtung nach Anspruch 1, wobei Mittel (19) vorgesehen sind, um Luft in die Kammer (2) einzubringen, um den Prozessmaterialdampf in Richtung der Wärmetauschmittel (16) mitzureißen.

3. Vorrichtung nach einem der vorhergehenden Ansprüche, wobei die Kühl-/Waschflüssigkeitsabgabemittel eine Pumpe (26) und Sprühdüsen (28) umfassen, die an dem oberen Teil der Kammer (2) angeordnet und den Innenwänden zugewandt sind.

4. Vorrichtung nach einem der vorhergehenden Ansprüche, wobei das Prozessmaterial reine Essigsäure ist.

5. Vorrichtung nach einem der vorhergehenden Ansprüche, wobei die Prozessmaterialrückgewinnungseinheit (34) eine Kühleinheit (33) für ein Wärmeträgerfluid der Wärmetauschmittel (16) umfasst.

6. Vorrichtung nach einem der vorhergehenden Ansprüche, wobei die Heizmittel (4) an der Außenwand der Kammer (2) angeordnet sind.

7. Vorrichtung nach einem der vorhergehenden Ansprüche, wobei eine Auslassleitung (18) der Kammer (2) vorgesehen ist, um Luft während des Heizschritts der hermetisch verschlossenen Kammer (2) abzulassen und für den Durchgang der/des aus der Behandlungskammer (2) ausgelassenen Prozessmaterialflüssigkeit und -dampfes in Richtung der Prozessmaterialrückgewinnungseinheit (34) am Ende der Behandlung des Artikels.

8. Verfahren zur Oberflächenbearbeitung von durch generative Fertigung hergestellten Polyamidartikeln, umfassend die Schritte
- Anordnen von mindestens einem der Artikel in der Behandlungskammer und hermetisches Verschließen der Kammer;
- Erwärmen der Kammer und des darin angeordneten Artikels auf eine vorgegebene Betriebstemperatur;
- sobald die vorgegebene Temperatur erreicht wurde, Zuführen eines flüssigen Prozessmaterials in die Kammer, um die Flüssigkeit teilweise zu verdampfen und die Oberfläche des Artikels dem gebildeten Dampf auszusetzen, der darin eindringt, um die Glasübergangstemperatur des Polyamids zumindest in einer Oberflächenschicht davon zu senken, wodurch ein Erweichen und Fließen der Polyamidschicht bewirkt wird, wobei ein Teil des flüssigen Prozessmaterials am Boden der Kammer als flüssige Phase im thermodynamischen Gleichgewicht mit dem Dampf verbleibt, und zwar bei einem Überdruck, der zwischen 100 und 200 kPa liegt, und bei einer Betriebstemperatur über eine vorgegebene Expositionszeit;
- sobald die vorgegebene Expositionszeit zwischen dem Dampf und dem Artikel verstrichen ist, rasches Druckentlasten der Kammer, wobei der Überdruck verwendet wird, um die Bodenflüssigkeit in Richtung einer Rückgewinnungseinheit zu drücken, wo sie gekühlt und gesammelt wird;
- Ablassen des in der Kammer vorhandenen Dampfs in Richtung der Rückgewinnungseinheit, wo der Dampf kondensiert wird und das Kondensat gekühlt und gesammelt wird;
und **gekennzeichnet durch**:
- Zirkulieren einer Kühl- und Waschflüssigkeit in der Kammer, bevor sie geöffnet und der behandelte Artikel entfernt wird.

9. Verfahren nach Anspruch 8, wobei nach dem Schritt der raschen Druckreduktion ein Schritt des Zuführens von Luft in die Kammer vorgesehen ist, um den Dampf aus Prozessmaterial in Richtung der Rückgewinnungseinheit zu drücken, wo er kondensiert wird und das Kondensat gekühlt und gesammelt wird.

10. Verfahren nach Anspruch 8 oder 9, wobei die Zeit der raschen Druckreduktion zwischen 10 und 60 Sekunden liegt.

11. Verfahren nach einem der Ansprüche 8 bis 10, wobei die vorgegebene Betriebstemperatur einige Grade höher ist als die Siedetemperatur des Prozessmaterials bei Atmosphärendruck, insbesondere nicht mehr als 5±1 °C über der Siedetemperatur liegt.

12. Verfahren nach einem der Ansprüche 8 bis 11, wobei das Prozessmaterial reine Essigsäure oder ein Gemisch aus Essigsäure und mindestens einem anderen Bestandteil ist, wobei die Konzentration der Essigsäure in dem Gemisch mindestens 60 Gew.-% beträgt, oder ein Gemisch aus Essigsäure und mindestens einem anderen Bestandteil ist, wobei die Konzentration der Essigsäure in dem Gemisch mindestens 60 Gew.-% beträgt und wobei das Gemisch ein azeotropes Gemisch ist.

13. Verfahren nach einem der Ansprüche 8 bis 12, wobei die vorgegebene Betriebstemperatur etwa 120 °C beträgt.

14. Verfahren nach einem der Ansprüche 8 bis 13, wobei die Kontaktzeit zwischen dem Dampf und der Oberfläche des Artikels zwischen 2 und 15 Minuten liegt.

15. Verfahren nach einem der Ansprüche 8 bis 14, wobei das flüssige Prozessmaterial vor dem Schritt des Erwärmens der Kammer bis zur vorgegebenen Betriebstemperatur in die Betriebskammer zugeführt wird.

## Revendications

1. Appareil de finition de surface d'articles en polyamide obtenus par fabrication additive, comprenant :
- une chambre de traitement (2) configurée pour recevoir au moins un article et équipée de moyens de fermeture hermétique (3) ;
- des moyens de chauffage (4) de ladite chambre hermétiquement fermée pour élever la température interne de ladite chambre et la température de l'article en polyamide qui y est placé à une température de fonctionnement prédéterminée et pour le maintenir à ladite température pendant tout le temps de fonctionnement ;
- un réservoir principal de liquide (10) pour un matériau de traitement liquide en communication fluidique avec ladite chambre (2) pour alimenter ledit matériau de traitement liquide dans ladite chambre une fois que ladite température de fonctionnement a été atteinte, une partie dudit matériau de traitement liquide se vaporisant et la vapeur formée qui entre en contact avec la surface dudit article provoquant le ramollissement d'une couche de surface de celui-ci, tandis que la partie restante dudit matériau de traitement liquide reste en phase liquide au fond de ladite chambre en équilibre thermodynamique avec ladite vapeur ;
- des moyens de ventilateur interne (7) placés dans ladite chambre (2) pour déplacer l'atmosphère de vapeur formée dans celle-ci, capable d'être activés une fois que ledit matériau de traitement liquide est alimenté dans ladite chambre ;
- une unité de récupération de matériau de traitement (34) comprenant des moyens d'échange de chaleur (16) pour refroidir le matériau de traitement liquide évacué du fond de ladite chambre en raison d'une pression positive qui s'y forme à la fin de l'étape de contact entre la vapeur et la surface de l'article, et pour condenser la vapeur dudit matériau de traitement provenant de ladite chambre,
et **caractérisé par** :
- des moyens de refroidissement et de lavage (23) pour refroidir et laver les parois de ladite chambre, comprenant un réservoir de lavage (24) pour un liquide de lavage et des moyens (26, 28) pour distribuer ledit liquide sur les parois de ladite chambre (2).

2. Appareil selon la revendication 1, dans lequel des moyens (19) sont prévus pour faire entrer de l'air dans ladite chambre (2) afin d'entraîner la vapeur de matériau de traitement vers lesdits moyens d'échange de chaleur (16).

3. Appareil selon l'une quelconque des revendications précédentes, dans lequel lesdits moyens de distribution de liquide de refroidissement/lavage comprennent une pompe (26) et des buses de pulvérisation (28) disposées au niveau de la partie supérieure de ladite chambre (2) et faisant face auxdites parois internes.

4. Appareil selon l'une quelconque des revendications précédentes, dans lequel ledit matériau de traitement est de l'acide acétique pur.

5. Appareil selon l'une quelconque des revendications précédentes, dans lequel ladite unité de récupération de matériau de traitement (34) comprend une unité de réfrigération (33) d'un fluide de transfert de chaleur desdits moyens d'échange de chaleur (16).

6. Appareil selon l'une quelconque des revendications précédentes, dans lequel lesdits moyens de chauffage (4) sont disposés sur la paroi externe de ladite chambre (2).

7. Appareil selon l'une quelconque des revendications précédentes, dans lequel un conduit d'évacuation (18) de la chambre (2) est prévu pour évacuer l'air pendant l'étape de chauffage de la chambre hermétiquement fermée (2) et pour le passage du liquide et de la vapeur de matériau de traitement évacués de ladite chambre de traitement (2) vers ladite unité de récupération de matériau de traitement (34) à la fin du traitement de l'article.

8. Procédé de finition de surface d'articles en polyamide obtenus par fabrication additive, comprenant les étapes consistant à
- placer au moins un desdits articles dans une chambre de traitement et fermer hermétiquement ladite chambre ;
- chauffer ladite chambre et l'article qui y est placé jusqu'à une température de fonctionnement prédéterminée ;
- une fois que ladite température prédéterminée a été atteinte, alimenter un matériau de traitement liquide dans ladite chambre, pour vaporiser partiellement ledit liquide et exposer la surface dudit article à la vapeur formée qui y pénètre pour abaisser la température de transition vitreuse du polyamide au moins dans une couche superficielle de celui-ci, provoquant ainsi le ramollissement et l'écoulement de ladite couche de polyamide, une partie dudit matériau de traitement liquide restant au fond de ladite chambre en phase liquide en équilibre thermodynamique avec ladite vapeur, à une pression positive comprise entre 100 et 200 kPa et à une température de fonctionnement sur un temps d'exposition prédéterminé ;
- une fois que ledit temps d'exposition prédéterminé entre ladite vapeur et ledit article s'est écoulé, dépressuriser rapidement ladite chambre, en utilisant ladite pression positive pour pousser ledit liquide de fond vers une unité de récupération où il est refroidi et collecté ;
- évacuer la vapeur présente dans ladite chambre vers ladite unité de récupération où la vapeur est condensée et le condensat est refroidi et collecté, et **caractérisé par** :
- faire circuler un liquide de refroidissement et de lavage de parois dans ladite chambre avant de l'ouvrir et de retirer l'article traité.

9. Procédé selon la revendication 8, dans lequel, après ladite étape de réduction rapide de pression, une étape d'alimentation d'air dans ladite chambre est prévue pour pousser la vapeur de matériau de traitement vers ladite unité de récupération où elle est condensée et le condensat est refroidi et collecté.

10. Procédé selon la revendication 8 ou 9, dans lequel le temps de réduction rapide de pression est compris entre 10 et 60 secondes.

11. Procédé selon l'une quelconque des revendications 8 à 10, dans lequel ladite température de fonctionnement prédéterminée est de quelques degrés supérieure à la température d'ébullition dudit matériau de traitement à la pression atmosphérique, en particulier pas plus de 5±1 °C au-dessus de la température d'ébullition.

12. Procédé selon l'une quelconque des revendications 8 à 11, dans lequel ledit matériau de traitement est de l'acide acétique pur, ou un mélange d'acide acétique et d'au moins un autre composant dans lequel la concentration d'acide acétique dans ledit mélange est d'au moins 60 % en poids, ou un mélange d'acide acétique et d'au moins un autre composant, dans lequel la concentration d'acide acétique dans ledit mélange est au moins 60 % en poids et dans lequel ledit mélange est un mélange azéotropique.

13. Procédé selon l'une quelconque des revendications 8 à 12, dans lequel ladite température de fonctionnement prédéterminée est environ 120 °C.

14. Procédé selon l'une quelconque des revendications 8 à 13, dans lequel le temps de contact entre la vapeur et la surface de l'article est compris entre 2 et 15 minutes.

15. Procédé selon l'une quelconque des revendications 8 à 14, dans lequel ledit matériau de traitement liquide est alimenté dans ladite chambre de fonctionnement avant l'étape de chauffage de la chambre jusqu'à la température de fonctionnement prédéterminée.
